# EUROPÄISCHE PATENTSCHRIFT

(11) **EP 3 363 524 B1**
(45) Veröffentlichungstag und Bekanntmachung des Hinweises auf die Patenterteilung: **13.05.2020**
(21) Anmeldenummer: 18157211.6
(22) Anmeldetag: 16.02.2018
(51) Int. Cl.: B01D 53/50, B01D 53/68

(54) **VERFAHREN ZUR ABSCHEIDUNG SAURER SCHADGASE AUS EINEM EINE NIEDRIGE ABGASTEMPERATUR AUFWEISENDEN ABGAS**
METHOD FOR REMOVING ACIDIC HAZARDOUS GASES FROM AN EXHAUST GAS HAVING A LOW EXHAUST GAS TEMPERATURE
PROCÉDÉ DE SÉPARATION DE GAZ NOCIFS ACIDES DE FUMÉES DE COMBUSTION PRÉSENTANT UNE FAIBLE TEMPÉRATURE DES FUMÉES

(30) Priorität: 17.02.2017 DE 102017103321; 22.05.2017 DE 102017111079
(43) Veröffentlichungstag der Anmeldung: 22.08.2018
(73) Patentinhaber: Graf Enviropro GmbH, 61381 Friedrichsdorf / Taunus (DE)
(72) Erfinder: Brand, Tobias, 63762 Großostheim (DE); Möbs, Maria Helena, 61231 Bad Nauheim (DE); Gutperl, Winfried, 36151 Burghaun (DE)
(74) Vertreter: Hebing, Norbert

(56) Entgegenhaltungen:
- EP-A2- 1 716 910
- US-A1- 2011 014 106

## Beschreibung

Die Erfindung bezieht sich auf ein Verfahren zur Abscheidung saurer Schadgase aus einem eine niedrige Abgastemperatur aufweisenden Abgas, bei dem das Abgas über einen Abgaskanal in eine Reaktionsstrecke geleitet wird und dem Abgas im Abgaskanal oder in der Reaktionsstrecke Natriumkarbonat, das zuvor durch die Aktivierung und Aufspaltung eines Vorläuferproduktes von Natriumkarbonat erzeugt worden ist, zugeführt wird und das als Sorbens mit den Schadgasen in der Reaktionsstrecke reagiert, so dass das Abgas, nachdem es ein auf die Reaktionsstrecke folgendes Filter passiert hat, als Reingas vorliegt, wobei ein Teil des Reingases als Reingasteilstrom in eine Rückführleitung abgezweigt wird, die zurück in den Abgaskanal und/oder in die Reaktionsstrecke führt, wobei das Vorläuferprodukt von Natriumkarbonat in den Reingasteilstrom an einer Dosierstelle in die Rückführleitung dosiert und dort aufgespalten wird, wobei der Reingasteilstrom stromaufwärts der Dosierstelle auf eine Aktivierungstemperatur aufgeheizt wird, so dass das Vorläuferprodukt von Natriumkarbonat an der Dosierstelle in einen aufgeheizten Reingasteilstrom dosiert wird, und wobei das Vorläuferprodukt mindestens zu 85% in der Rückführleitung aufgespalten worden ist, bevor es mit dem Reingasteilstrom in die Reaktionsstrecke zurückgeführt wird.

Ein solches Verfahren wird vorzugsweise bei Abgasen angewandt, die aus diversen industriellen oder Kraftwerksprozessen oder Müllverbrennungsanlagen stammen.

Bei dem Vorläuferprodukt handelt es sich meistens um Natriumbikarbonat(chemischer Name: Natriumhydrogencarbonat, Summenformel: NaHCO3), aber auch natürlich vorkommende, Natriumhydrogenkarbonat enthaltende Mineralien wie Trona (Na3 (HCO3) (CO3) · 2H2O) werden eingesetzt. Im Nachfolgenden wird Natriumbikarbonat beispielhaft für alle natriumbikarbonathaltigen Sorbentien verwendet.

Von Reingas spricht man im Allgemeinen, wenn die Emissionskonzentrationen den gesetzlich geforderten entsprechen oder darunter liegen.

Natriumbikarbonat ist neben Kalkhydrat ein oft eingesetztes Sorbens zur Abscheidung saurer Schadgase in der Abgasreinigung. Saure Schadgase sind beispielsweise HCl, SO2 und SO3. Insbesondere wenn die Abgase aus der Verbrennung von Ersatzbrennstoffen wie Müll stammen, ist Natriumbikarbonat ein geeignetes Sorbens, um die Schadstoffe aus dem Abgas sicher und dauerhaft auf die vorgegebenen Emissionsgrenzwerte zu reduzieren. Abgase aus Müllverbrennungsanlagen zeichnen sich neben der Belastung durch Schwermetalle, insbesondere Quecksilber und evtl. auch durch Dioxine und Furane, aber besonders durch einen hohen HCl-Gehalt aus.

Dieser hohe HCl-Gehalt im Abgas erschwert die Nutzung eines Standard-Kalkhydrats, das mit akzeptablen Stöchiometrien bei den geforderten Abscheideleistungen in einem Temperaturbereich von 65-110 °C besonders reaktiv ist. Auf Grund des Calciumchlorid-Gleichgewichtes ist das entsprechende Quenchen auf diese Reaktionstemperaturen nicht möglich, da sich hoch hygroskopisches Calciumchlorid (CaCl2) bilden würde.

Eine interessante Alternative zur Nutzung von Standard-Kalkhydrat ist die Nutzung von Natriumbikarbonat, das aber erst ab einer Temperatur von ca. 130-150 °C ausreichend schnell reagiert. Das dabei gebildete Natriumchlorid (NaCl) ist stabil und nicht hygroskopisch. Natriumbikarbonat eignet sich aber ebenso zur Abscheidung von Schwefeloxiden aus Abgasen, die aus den Reaktanten stabiles Natriumsulfat bilden. Das ist insbesondere bei kleineren Anlagen mit relativ geringen Abgasmengen, z. B. kleineren Kohlefeuerungen, eine interessante Alternative.

Ab einer Temperatur von ca. 60 °C beginnt der thermische Zerfall von Natriumbikarbonat mit der "in situ"-Bildung von Natriumkarbonat unter Abspaltung von Wasser und Kohlendioxid. Das gebildete Natriumkarbonat besitzt eine hochaktive Oberfläche. Allerdings verläuft dieser Prozess auf Grund der aufzubringenden Aktivierungsenergie sehr langsam. Dies führt zu hohen Verweilzeiten und entsprechend langen Reaktionsstrecken.

Erst oberhalb einer Temperatur von etwa 130-150 °C verläuft dieser Zerfall mit einer akzeptablen Geschwindigkeit. Deshalb ist es nur unter erschwerten Randbedingungen möglich, z. B. mit unverhältnismäßig langen Verweilzeiten, die bspw. durch eine entsprechend lange Kanalführung zu erreichen sind, Natriumbikarbonat bei niedrigeren Temperaturen als Sorbens zu verwenden.

Wenn die Abgastemperaturen nicht ausreichend hoch sind, um das Natriumbikarbonat mit einer angemessenen Verweilzeit von ca. 2 s und einer akzeptablen Stöchiometrie einsetzen zu können, gibt es verschiedene Möglichkeiten, eine Präaktivierung/Aufspaltung des Natriumbikarbonats durchzuführen.

Die US 2011/0014106 beschreibt ein Verfahren zur Reinigung von heißem Abgas, bei dem ein Teilstrom des Abgases zur Aktivierung des Vorläuferproduktes vom Natriumkarbonat genutzt wird.

Die US 2012/0244054 beschreibt einen zweistufigen Prozess zur Reinigung von Abgas, das saure Schadgase enthält. Hier wird ein Teilstrom, der bis zu 50 % des heißen Abgasstromes beträgt, nach einem Wärmetauscher aber noch vor Eintritt in die Reaktionsstrecke in einen Seitenkanal abgezweigt, in den dann das Natriumbikarbonat eingedüst und teilweise bis nahezu vollständig zersetzt wird, wobei die Temperatur im abgezweigten Teilstrom mindestens 50 °C höher als im Hauptabgasstrom ist. Anschließend wird dieser Teilstrom, der das aktivierte Sorbens enthält, wieder mit dem Hauptstrom zusammengeführt.

Nachteil dieser Methode ist es, dass die Kesselleistung reduziert wird, da die benötigte Energie für die Aufspaltung des Natriumbikarbonats aus der vom Kessel erzeugten Energie genommen wird. Außerdem kann eine sehr hohe Staubbeladung des Abgases ungewünschte Einflüsse wie Verlängerung der Verweilzeit und Erhöhung der Stöchiometrie sowie Verschleiß durch Aschepartikel mit sich bringen.

Die IT 1306648 beschreibt eine Methode zur Aktivierung von Natriumbikarbonat in einem Zersetzungsreaktor, das zuvor auf 10-50 µm aufgemahlen wurde. Die zur thermischen Behandlung des Natriumbikarbonates notwendige Energie wird durch das Verbrennen von Methangas oder anderen Brennstoffen, die Wasser und Kohlendioxid als Verbrennungsgase liefern, elektrisch oder mit Dampf erzeugt. Das aktivierte, hoch reaktive Natriumkarbonat wird dann über einen Mixer in das Abgas eingebracht.

Die US 4, 555, 391 beschreibt die trockene Eindüsung von Natriumbikarbonat oder entsprechenden Mineralien wie Trona, die jenes enthalten, wobei zur besseren Ausnutzung des Sorbens dieses mit den bereits gebildeten Reaktionsprodukten mehrfach rezirkuliert wird und so die Verweilzeit erhöht wird. Das Rezirkulat wird vor der Wiedereindüsung in den Abgasstrom auf Temperaturen < 90 °C gekühlt. Dazu muss entweder ein Wärmetauscher vorgehalten werden oder die Kühlung erfolgt in situ auf dem Filterkuchen durch die Einbringung kühler Luft, wozu in jedem Fall Energie aufgewendet werden muss.

In EP 1 716 910 wird die Aktivierung von Feststoff beschrieben, der aus dem Filterbunker eines Schlauchfilters ausgeschleust und in einen Reaktor eingebracht wird, in den gleichzeitig ein aufgeheizter, mit Feuchte beaufschlagter Reingasteilstrom eingebracht wird und in dem die Aktivierung stattfindet, bevor der Feststoff ganz oder teilweise wieder in den Abgaskanal zurückgeführt wird. Das ziel ist, die Nachteile der Verfahren, die den Stand der Technik repräsentieren und insbesondere Anhaftungen, wie sie vor allem bei Reaktionsprodukten stark Chlorid-haltiger Abgase auftreten können, zu vermeiden. Für die Aktivierung von natriumbikarbonathaltigen Sorbentien ist die hohe Feuchte, die durch Wasser-/Dampfeinbringung erreicht wird, allerdings kontraproduktiv. Außerdem ist der Prozess aus energetischer Sicht ungünstig, da der gesamte inerte Anteil des Rezirkulats mit aufgeheizt werden muss. Weiterhin wird das Rezirkulat aus dem Filterbunker unspezifisch verwendet und besitzt deshalb eine eher ungünstig niedrige Konzentration an noch ungenutztem/zu aktivierendem Sorbens, so dass der Massenstrom des Rezirkulats sehr hoch wird.

Die Erfindung beruht auf der Aufgabe, zur nahstöchiometrischen Abscheidung saurer Schadgase aus Abgasen auf niedrigste Emissionswerte eine einfache, verschleißarme, energieeffiziente und kostengünstige neue Methode zur Aufspaltung von Natriumbikarbonat oder anderen Vorstufen des Natriumkarbonats zu erhalten, um das Sorbens insbesondere auch bei niedrigeren Abgastemperaturen < 150 °C oder sogar < 140 °C mit den nachfolgend aufgeführten Vorteilen nutzen zu können :
- Einfache Anwendung ohne Spezialequipment
- Energieeffizient durch Ausnutzung der vorhandenen Wärme des Reingases
- Energieeffizient durch Aufheizung reinen Sorbens ohne Anteile von bereits reagiertem, inertem Produkt
- Klein dimensionierte Rückführleitung
- Kein nennenswerter zusätzlicher Druckverlust durch Feststoffrezirkulation, da die rezirkulierte Menge an Feststoff gering ist (Beladung < 80 g/m³ Abgas, maximale Beladung < 100 g/m³ Abgas)
- Optimierte Kanalführung und Kanallänge auf Grund kurzer Verweilzeiten
- Optimierte Nutzung von noch nicht verbrauchtem Sorbens durch partielle Wiederverwendung auf gleichem Temperaturniveau und ohne weitere Behandlung
- Einfache Regelungen zur Effizienzsteigerung

Dazu sieht die Erfindung ein Verfahren mit den Merkmalen des kennzeichnenden Teils des Anspruches 1 vor, wobei insbesondere
das Verfahren bei einer Abgastemperatur von kleiner als 150 °C angewandt wird,
die Verweilzeit des Sorbens in der Reaktionsstrecke so gewählt ist, dass es beim Verlassen der Reaktionsstrecke mindestens zu 85% zu Reaktionsprodukt umgesetzt ist und nicht mehr als Hydrogenkarbonat vorliegt,
dass der Teil des Reingases, der als Reingasteilstrom in die Rückführleitung abgezweigt wird, kleiner ist als 8% des Reingasstromes, und
dass der Reingasteilstrom in der Rückführleitung so aufgeheizt wird, dass seine Rückführtemperatur, das ist die Temperatur die vor der Rückführung in die Reaktionsstrecke vorliegt, 150-180 °C beträgt.

Da nur ein kleiner Teil des Reingases, nämlich weniger als 8%, bevorzugt weniger als 5%, als Reingasteilstrom in die Rückführleitung abgezweigt wird, kann die Rückführleitung klein dimensioniert werden. Das Natriumbikarbonat wird an einer Dosierstelle in den zuvor aufgeheizten Reingasteilstrom innerhalb der Rückführleitung dosiert.

Vor der Eindüsung des Natriumbikarbonats erfolgt eine Aufheizung des Reingasteilstroms in der Rückführleitung stromaufwärts der Dosierstelle auf eine Temperatur von 180 °C bis 300 °C, bevorzugt auf eine Temperatur von 180 °C bis 260 °C, geregelt über die Sollwerttemperatur vor Rückführung des mit Sorbens beladenen Reingasteilstroms in den Abgaskanal/die Reaktionsstrecke von 150-180 °C. Natriumbikarbonat wird also in den aufgeheizten Reingasteilstrom eindosiert, so dass die Aufspaltung sofort beginnen kann.

Das Verfahren soll vor allem dann zum Einsatz kommen, wenn die Abgastemperatur kleiner als 150 °C oder sogar kleiner als 140 °C beträgt, weil dann die Temperatur nicht ausreicht, Natriumbikarbonat in der Reaktionsstrecke ausreichend kurzer Zeit aufzuspalten.

Um die Aufspaltung des Natriumbikarbonats durch intensiveren Wärme- und Stoffaustausch zu beschleunigen, kann die Rückführleitung stromabwärts der Dosierstelle als Wirbelstromreaktor ausgebildet werden, der so dimensioniert ist, dass eine Geschwindigkeit von 8-16 m/s, bevorzugt aber 10-12 m/s vorherrscht, so dass der Platzbedarf reduziert wird.

Vorzugweise handelt es sich bei dem Wirbelstromreaktor um einen Vertikalreaktor, der ggf. eine Umlenkung von mehr als 90° erhält.

Das erfindungsgemäße Verfahren nutzt demnach einen Teilstrom < 8%, bevorzugt < 5% des Reingases, in den das Natriumbikarbonat eingedüst wird und der zuvor so aufgeheizt wird, dass die Rückführtemperatur 150-180 °C beträgt, um in dem aufgeheizten Teilstrom eine Präaktivierung des Sorbens durch Abspaltung von Wasser und Kohlendioxid durchzuführen. Der bei direkter Eindüsung in den Abgaskanal in einem Prozess stattfindende Abspaltungs- und Reaktionsschritt wird gemäß dieser Erfindung in zwei Schritte aufgeteilt, und zwar in den Aufspaltungsschritt, der im abgespaltenen aufgeheizten Reingasteilstrom stattfindet und den Reaktionsschritt, der in der Abgas enthaltenden Reaktionsstrecke stattfindet, in die der aufgeheizte Reingasteilstrom, der mit aktiviertem/aufgespaltenem Material beladen ist, zurückgeführt worden ist.

Um die gewünschte Schadgasreduzierung zu erzielen, wird die zu dosierende Menge des Vorläuferprodukts von Natriumkarbonat durch den Gehalt an Schadgasen im Abgas und den geforderten reduzierten Schadgasgehalt im Reingas geregelt.

Um eine bessere Reaktionsfreudigkeit des Sorbens zu erreichen, kann das Vorläuferprodukt des Natriumkarbonats direkt vor der Eindüsung aufgemahlen werden.

Die Temperaturen im Abgaskanal betragen in der Regel 100-200 °C. Nachdem der Abgasstrom die Reaktionsstrecke und ein der Rektionsstrecke nachgeschaltetes Entstaubungsfilter durchlaufen hat und nun als Reingasstrom vorliegt, beträgt seine Temperatur zwischen 80-200 °C. Die Verweilzeit des Sorbens im Abgaskanal und der Reaktionsstrecke beträgt 0,5-4 Sekunden, wobei höhere Temperaturen zu kürzeren Verweilzeiten führen, so dass das Sorbens mindestens zu 85 % (optimal wären 95%) zu Reaktionsprodukt umgesetzt ist und nicht mehr als Hydrogenkarbonat vorliegt.

In der Rückführleitung sollte die Verweilzeit des Natriumbikarbonats stromabwärts der Dosierstelle bei mindestens 0,5 s, bevorzugt aber zwischen 0,5 s und 2 s liegen. Mit Verweilzeit ist die Zeit zwischen dem Zeitpunkt des Eintritts des Sorbens in die Rückführleitung und dem Zeitpunkt bezeichnet, zu dem es die Rückführleitung wieder verlässt. Die Verweilzeit wird so gewählt, dass 95 %, mindestens aber 85 % des Natriumbikarbonats aufgespalten werden und die Rückführleitung als Natriumkarbonat verlassen.

Bei Temperaturen des Abgases am Eintritt in den Abgaskanal zwischen ca. 150 °C und 200 °C kann das Natriumbikarbonat direkt, also ohne vorhergehende Aktivierung, in den Abgaskanal oder die Reaktionsstrecke eingeblasen werden. Bei Temperaturen zwischen 80 °C und ca. 150 °C wird die erfindungsgemäße Präaktivierung/Aufspaltung eingesetzt.

Zur externen Karbonatspaltung wird ein Reingasteilstrom, der < 5% der gesamten Reingasmenge beträgt, rezirkuliert und auf Temperaturen zwischen 180 °C und 300 °C, vorzugsweise auf 180 °C bis 260 °C aufgeheizt, geregelt über die Sollwertvorgabe für die Temperatur vor Wiedereintritt in den Abgaskanal/die Reaktionsstrecke.

Die Beladung des abgespaltenen Reingasstromes mit Natriumbikarbonat beträgt 1 kg Natriumbikarbonat pro 2-5 m³ Reingas, bestenfalls 1 kg Natriumbikarbonat pro 3-4 m³ Reingas.

Unter Berücksichtigung dieser Vorgabe wird die benötigte Menge an zu rezirkulierendem Reingas anlagenspezifisch berechnet. Dabei soll eine möglichst vollständige Aufspaltung erreicht werden. Die Temperatur, auf die das abgezweigte Reingas aufgeheizt werden muss, wird so eingestellt, dass am Punkt der Wiedereindüsung in den Abgaskanal eine Temperatur von 150 - 180 °C eingehalten wird. Zur Aufheizung des Reingasteilstroms in der Rückführleitung ist eine Aufheizvorrichtung vorgesehen, deren Leistung bei einem eingestellten konstanten Reingasteilstrom so geregelt wird, dass die vor dem Übergang des Reingasteilstroms in den Abgaskanal und/oder die Reaktionsstrecke herrschende Rückführtemperatur des Reingasteilstroms eine vorgegebene Sollwerttemperatur erreicht, die mindesten 150 °C beträgt.

Außerdem kann die in die Rückführleitung abgezweigte Reingasteilmenge erhöht werden, wenn die Rückführtemperatur unter die Abgastemperatur fällt. Dies ist ein Hinweis darauf, dass für die Aufspaltung des benötigten Natriumbikarbonats zu wenig Energie zur Verfügung gestellt worden ist. Man könnte durch eine Erhöhung der Temperatur des Reingasteilstromes mehr Energie in diesen einbringen. Dies würde aber die Anlage bei üblichen Werkstoffen zu sehr mechanisch belasten. Die vorgeschlagene Lösung sieht daher vor, einen größeren Reingasteilstrom abzuzweigen, der bei einer im Wesentlichen gleichbleibenden Temperatur eine entsprechend höhere Energiemenge für die Aufspaltung des Natriumbikarbonats mit sich führt.

Als Aufheizvorrichtung eignet sich vorzugsweise ein Gasbrenner, aber auch ein Ölbrenner oder ein elektrischer Heizer sind möglich.

Die Gasgeschwindigkeit im Abgaskanal bei 100 % Abgasvolumenstrom beträgt 18 ± 2 m/s, in der Reaktionsstrecke ca. 8-16 m/s, bevorzugt aber 8-10 m/s und in der Rückführleitung vor Eindüsung des Sorbens 18 ± 2 m/s, nach Eindüsung des Sorbens 8-16 m/s, bevorzugt aber 10-12 m/s. Diese Werte bestimmen die Auslegung der jeweiligen Anlage.

Um eine gleichmäßige Verteilung des Sorbens im Abgaskanal zu erreichen, ist vorgesehen, dass der Abgaskanal auf der Oberseite mit einem gleichmäßig verteilten Netz von Eindüsstellen für den Reingasteilstrom ausgestattet ist.

Im Schlauchfilter wird der Feststoff aus dem Abgas abgeschieden. Ein Teil des Feststoffes, der noch nutzbares Material enthält, wird am Eintritt in den Filter abgeschieden und kann partiell (< 80 g/m³, maximal aber < 100 g/m³ Abgas) in den Kreislauf zurückgeführt werden, um die Sorbensausnutzung weiter zu optimieren. Der an den Schlauchfiltern sich abscheidende Filterkuchen wird mit Druckluft abgereinigt und im Filterbunker gesammelt. Von dort wird er in das Reststoffsilo ausgeschleust.

Die vorliegende Erfindung verbessert in hervorragender Weise den Einsatz von Natriumbikarbonat als Sorbens in der Abgasreinigung bei niedrigen Abgastemperaturen < 150 °C durch Trennung des Aufspaltungs-/Aktivierungsschrittes vom Reaktionsschritt.

Am Beispiel des Natriumbikarbonats (Natriumhydrogenkarbonats) wird erläutert, wie der Prozess verläuft. Natriumbikarbonat zersetzt sich gemäß der folgenden Reaktionsgleichung:

2 NaHCO3 → Na2CO3 + H2O + CO2

(2 Teile Natriumbikarbonat zersetzen sich zu je einem Teil Natriumkarbonat, Wasser und Kohlendioxid). Diese Zersetzung erfordert einen erheblichen Energieaufwand, da insbesondere die Verdampfungsenthalpie für das abgespaltene Wasser aufgewendet werden muss, die bei 100 °C 2257 kJ/kg beträgt.

Das bei der Zersetzung gebildete Natriumkarbonat (Na2C03) ist hoch reaktiv, es wird quasi in einem "status nascendi" gebildet und dann direkt in die Reaktionsstrecke oder in den davor verlaufenden Abgaskanal injiziert. Dort reagiert es dann mit den sauren Schadgasen. Die Reaktionen verlaufen gemäß den nachfolgenden Reaktionsgleichungen:

Na2CO3 + SO2 → Na2SO3 + CO2

Na2CO3 + SO2 + ½ O2 "Na2SO4 + CO2

Na2CO3 + SO3 → Na2SO4 + CO2

Na2C03 + 2 HCl → 2 NaCl + CO2 + H2O

Na2C03 + 2 HF → 2 NaF + CO2 + H2O

Die dabei entstehenden Reaktionsprodukte sind nicht hygroskopisch und werden teilweise in neuen Prozessen weiterverwendet.

Diese Reaktionen laufen zeitlich gesehen schnell ab, aber eine Gesamtverweilzeit von ca. 1-2 s ist vorzusehen. Wenn das zur Entstaubung vorgesehene Filter als Gewebefilter ausgeführt wird, kann dieses in die Verweilzeitbetrachtung einbezogen werden, da hier noch eine gewisse Nachreaktion stattfindet.

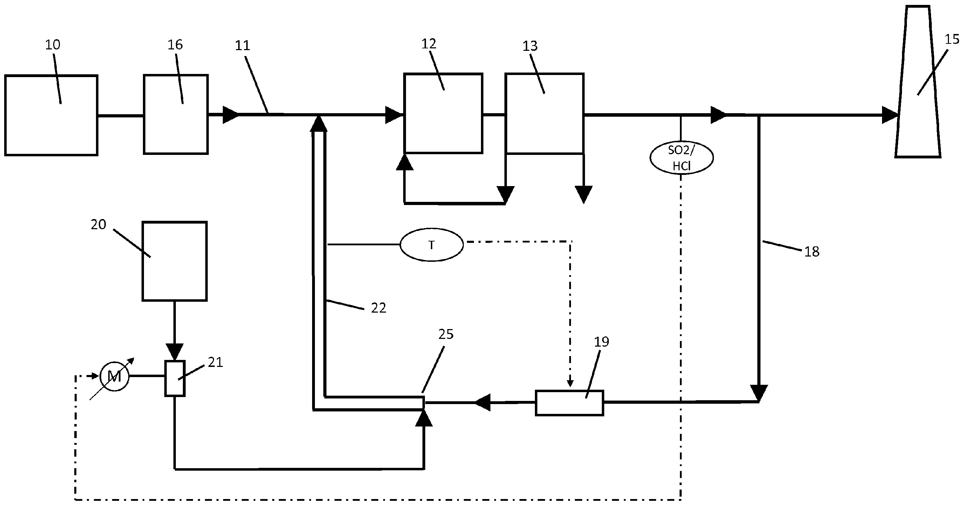

Im Folgenden soll anhand eines Ausführungsbeispiels die Erfindung näher erläutert werden. Dazu zeigt die einzige Figur schematisch den Prozess der Aufspaltung des Natriumbikarbonats oder anderer Vorstufen des Natriumkarbonats sowie die vorgesehene Prozessregelung.

Um den Abspaltungsschritt vom Reaktionsschritt des Sorbens zu trennen, sieht die Erfindung das folgende Verfahren vor:
Das von einem Kessel 10 kommende Abgas wird über einen Abgaskanal 11 und eine Reaktionsstrecke 12 dem Filter 13 zur Entstaubung zugeführt. Die Abgase werden vom Entstaubungsfilter 13 zu einem Kamin 15 transportiert. Zwischen Kessel 10 und Reaktionsstrecke 12 kann eine Staubvorabscheidung (ESP, Zyklon) 16 installiert sein.

Wenn die Abgastemperatur am Eintritt in den Abgaskanal 11 80-150 °C beträgt, wird ein Reingasteilstrom in eine Rückführleitung 18 abgetrennt und dort über eine mit Gas oder Öl betriebene oder elektrische Aufheizvorrichtung 19 auf Temperaturen zwischen 180 °C und 300 °C, vorzugsweise auf Temperaturen zwischen 180 °C und 260 °C aufgeheizt, wobei die Aufheiztemperatur so gewählt wird, dass die Temperatur vor Wiedereindüsung des mit Sorbens beladenen Reingasstromes in den Abgaskanal 11/die Reaktionsstrecke 12 mindestens 150 °C beträgt.

In den Reingasteilstrom wird nach der Aufheizvorrichtung 19 aus einem Vorratsbehältnis 20 gemahlenes Natriumbikarbonat über eine Dosiereinrichtung 21 an einer Dosierstelle 25 in der Rückführleitung 18 dosiert, die sich stromabwärts der Aufheizvorrichtung unter Beachtung einer gewissen Mischstrecke befindet.

In dem aufgeheizten Reingasteilstrom findet dann in der Rückführleitung, die als Wirbelstromreaktor ausgebildet sein kann, der Zerfall des Natriumbikarbonats in sehr kurzer Zeit statt. Das Zerfallsprodukt des Natriumbikarbonats, das Natriumkarbonat, wird mit dem aufgeheizten Reingasteilstrom, der auch das beim Zerfall entstehende Kohlendioxid und den Wasserdampf aufnimmt, in den Abgaskanal 11 oder in die Reaktionsstrecke 12 eindosiert. Nachdem der Reingasteilstrom mit dem aktivierten Sorbens in den Abgas führenden Abgaskanal 11 oder in die Reaktionsstrecke 12 zurückgeführt wurde, finden jetzt im Abgaskanal 11 und/oder in der Reaktionsstrecke 12 die eigentlichen Reaktionen zwischen dem Natriumkarbonat und den sauren Schadgasen statt.

Wenn das Abgas am Eintritt in den Abgaskanal 11 eine Temperatur von mehr als 150 °C besitzt, kann das Natriumbikarbonat direkt aus dem Vorratsbehältnis 20 in den Abgaskanal 11 dosiert werden. Eine Reingasrezirkulation wird nicht benötigt.

In der Reaktionsstrecke 12 soll eine Sorbens-Verweilzeit von ca. 0,5-4 s inklusive Filter erreicht werden, vorzugsweise 1-2 s. Die Verweilzeit des Vorläuferproduktes in der Rückführleitung 22 ab Eindüsung des Sorbens beträgt mindestens 0,5 s, ist aber in der Regel nicht länger als 2 s. Die Gasgeschwindigkeit im Abgaskanal 11 beträgt bei 100 % Abgasvolumenstrom ca. 18 ± 2 m/s, in der Reaktionsstrecke 12 8-16 m/s, bevorzugt aber 8-10 m/s und in der Rückführleitung vor Eindüsung des Sorbens 18 ± 2 m/s, nach Eindüsung des Sorbens 8-16 m/s, bevorzugt aber 10-12 m/s.

Eine gleichmäßige Verteilung des Sorbens über den Kanalquerschnitt muss sichergestellt werden. Dazu werden mehrere Dosieröffnungen über die obere Querschnittsfläche des Abgaskanals 11 oder der Reaktionsstrecke 12 eingebaut.

Gegenüber der in den oben zitierten Patenten beschriebenen Form der Aktivierung durch Entkopplung vom Abgasstrom wird hier die Energie, die im Reingas aufgrund der Temperatur vorhanden ist, genutzt. Dadurch ist die Temperaturdifferenz zur gewünschten Zerfallstemperatur geringer. Es kann also kostengünstig eine Aufspaltung des Natriumbikarbonats durchgeführt werden, da nur noch die Energiedifferenz zwischen Reingastemperatur und benötigter Zerfallstemperatur aufgebracht werden muss. Die Leistung dieser Aufheizvorrichtung 19 wird so ausgelegt, dass am Punkt der Wiedereindüsung in den Abgaskanal 11/die Reaktionsstrecke 12 eine Temperatur von 150-180 °C eingehalten wird. Diese Temperatur wird dem System als Temperatursollwert für die Regelung der Aufheizvorrichtung vorgegeben. Weicht der Istwert der Temperatur in einem bestimmten, vordefinierten Maß vom Sollwert ab, regelt die Aufheizvorrichtung 19 automatisch nach.

Die Menge an Natriumbikarbonat, die zur Aufspaltung in den abgezweigten Reingasteilstrom eingeblasen wird, wird durch den S02/HCl-Abgasgehalt und den geforderten S02/HCl-Reingasgehalt geregelt. Dazu wird die Restschadstoffkonzentration im Reingas gemessen. Die Zufuhr von zu aktivierendem Sorbens wird erhöht, wenn die Restschadstoffkonzentration im Reingas über den vorgegebenen Sollwert steigt.

Die Temperatur, auf die der abgezweigte Reingasteilstrom aufgeheizt werden muss, ist unter Berücksichtigung aller energierelevanten Prozesse zu berechnen. Diese sind:
- Aufheizung des entstehenden Natriumkarbonats
- Aufheizung des bei der Spaltung entstehenden Wasseranteils
- Verdampfungsenthalpie dieses Wasseranteils
- Aufheizung des gebildeten Wasserdampfanteils
- Aufheizung des gebildeten Kohlendioxids

Diese Berechnung dient dazu die Aufheizvorrichtung zu dimensionieren.

Die thermodynamisch relevanten Prozesse sollen an einem Beispiel verdeutlicht werden:
Beispielsweise beträgt der Abgasvolumenstrom 100.000 m³/h, die Abgastemperatur 140 °C. Es werden ca. 1.250 m³/h Reingas als Reingasteilstrom in die Rückführleitung 18 abgezweigt, um es aufzuheizen. Der Kanalquerschnitt für den Reingasteilstrom wird so dimensioniert, dass eine ausreichende Verweilzeit für das Natriumbikarbonat etwa 0,5-2 s ab Eindüsstelle in der Rückführleitung 22 erreicht wird. Das entstehende Natriumkarbonat entsteht quasi "in situ", d.h., es soll mit den Schadgasen reagieren, bevor die Kristallisation einsetzt. Je nach Bedarf an Natriumbikarbonat wird die Temperatur, auf die der abgezweigte Reingasteilstrom aufgeheizt werden muss, berechnet. Wird beispielsweise angenommen, dass die zu dosierende Menge an Natriumbikarbonat 300 kg/h beträgt und die Temperatur des verwendeten Natriumbikarbonats an der Dosierstelle 25 in die Rückführleitung 20 °C beträgt, reicht es aus, den Reingasteilstrom auf 260 °C aufzuheizen. Der in das Abgas zurückgeführte Reingasteilstrom, der das Natriumkarbonat in aktivierter Form enthält, besitzt dann eine Temperatur von etwa 150 °C. Zur Aufheizung des Reingasteilstromes werden dann, basierend auf einem Heizwert für Propangas von ca. 26 kWh/m³, ca. 1,5 m³/h Propangas oder eine elektrische Leistung von 38 kW pro Stunde benötigt.

Das hier beschriebene Verfahren ermöglicht in vorteilhafter Weise eine einfache Aufspaltung und Aktivierung des Natriumbikarbonats oder anderer Vorstufen des Natriumkarbonats und damit seine Nutzung auch in niedrigeren Temperaturbereichen ohne Beeinflussung der Kesselleistung, ohne Eingriff in Systeme, die außerhalb der eigenen Anlage liegen, ohne eine separate Anlage zur Aufheizung bereit zu stellen, ohne nennenswert erhöhten Druckverlust, ohne eine lange Reaktionsstrecke mit entsprechend hohem Platzbedarf zur Erhöhung der Verweilzeit vorzusehen und ohne Verschleißpotential.

Eine weitere Ausführung des hier beschriebenen Verfahrens beinhaltet die partielle Rückführung von am Eintritt in das Schlauchfilter abgeschiedenem Feststoff, der noch unverbrauchtes Sorbens enthält, in die Reaktionsstrecke/den Abgaskanal auf dem vorhandenen Temperaturniveau.

Varianten zur hier beschriebenen Ausgestaltung des Prozesses sind möglich. Beispielsweise können das Natriumbikarbonat oder andere Vorstufen des Natriumkarbonates auch ungemahlen vorgehalten werden. Sie werden dann mit üblicher Mahltechnik auf die geforderte Korngröße, die insbesondere von der Art der zu entfernenden Schadgase abhängt, aufgemahlen. Das Natriumbikarbonat sollte gemäß Herstellerinformationen für eine HCl-Reingaskonzentration ≥ 10 mg/Nm³ auf einen d90 < 35 µm aufgemahlen werden und auf einen d90-Wert < 20 µm für Emissionswerte für HCl < 10 mg/Nm³ sowie für SOx-Abscheidegrade > 80%.

Der Vorteil des Mahlens besteht darin, dass der Mahlvorgang als solcher bereits das Energieniveau anhebt und das frisch aufgemahlene Natriumbikarbonat reaktiver ist als aufgemahlen gelagertes Material. Damit könnte die Verweilzeit für den Aktivierungsprozess noch optimiert werden. Ebenso ist dadurch die zur Aktivierung benötigte Energie deutlich geringer.

Eine vorteilhafte Alternative besteht darin, die Reaktionsstrecke 12, die standardmäßig als horizontaler Kanal ausgebildet ist, als Vertikalreaktor auszubilden. Bei der vertikalen Ausführung werden optimierte Stoffübergänge auf Grund der höheren Relativbewegung zwischen Gas und Feststoff erreicht und so die Reaktionszeiten verkürzt. Weiterhin wird die Bauweise kompakter, da nicht so viel horizontale Kanalstrecke installiert werden muss.

### Bezugszeichenliste

- 10: Kessel
- 11: Abgaskanal
- 12: Reaktionsstrecke
- 13: Entstaubungsfilter

- 15: Kamin
- 16: Staubvorabscheidung

- 18: Rückführleitung vor Dosierstelle
- 19: Aufheizvorrichtung

- 20: Vorratsbehältnis
- 21: Dosiereinrichtung
- 22: Rückführleitung nach Dosierstelle

- 25: Dosierstelle

## Patentansprüche

1. Verfahren zur Abscheidung saurer Schadgase aus einem eine niedrige Abgastemperatur aufweisenden Abgas, bei dem das Abgas über einen Abgaskanal (11) in eine Reaktionsstrecke (12) geleitet wird und dem Abgas im Abgaskanal (11) oder in der Reaktionsstrecke (12) Natriumkarbonat, das zuvor durch die Aktivierung und Aufspaltung eines Vorläuferproduktes von Natriumkarbonat erzeugt worden ist, zugeführt wird und das als Sorbens mit den Schadgasen in der Reaktionsstrecke (12) reagiert, so dass das Abgas, nachdem es ein auf die Reaktionsstrecke (12) folgendes Filter (13) passiert hat, als Reingas vorliegt, wobei ein Teil des Reingases als Reingasteilstrom in eine Rückführleitung (18, 22) abgezweigt wird, die zurück in den Abgaskanal (11) und/oder in die Reaktionsstrecke (12) führt, wobei das Vorläuferprodukt von Natriumkarbonat in den Reingasteilstrom an einer Dosierstelle (25) in die Rückführleitung (18, 22) dosiert und dort aufgespalten wird, wobei der Reingasteilstrom stromaufwärts der Dosierstelle (25) auf eine Aktivierungstemperatur aufgeheizt wird, so dass das Vorläuferprodukt von Natriumkarbonat an der Dosierstelle (25) in einen aufgeheizten Reingasteilstrom dosiert wird, und wobei das Vorläuferprodukt mindestens zu 85% in der Rückführleitung aufgespalten worden ist, bevor es mit dem Reingasteilstrom in die Reaktionsstrecke (12) zurückgeführt wird, **dadurch gekennzeichnet,**
**dass** das Verfahren bei einer Abgastemperatur von kleiner als 150 °C angewandt wird,
**dass** die Verweilzeit des Sorbens in der Reaktionsstrecke so gewählt ist, dass es beim Verlassen der Reaktionsstrecke mindestens zu 85% zu Reaktionsprodukt umgesetzt ist und nicht mehr als Hydrogenkarbonat vorliegt,
**dass** der Teil des Reingases, der als Reingasteilstrom in die Rückführleitung (18, 22) abgezweigt wird, kleiner ist als 8% des Reingasstromes,
**dass** der Reingasteilstrom in der Rückführleitung so aufgeheizt wird, dass seine Rückführtemperatur, das ist die Temperatur die vor der Rückführung in die Reaktionsstrecke (12) vorliegt, 150-180 °C beträgt, dass die Aktivierungstemperatur 130-300 °C, bevorzugt 180-260 °C beträgt, und
**dass** die Aktivierungstemperatur über einen vorgegebenen Sollwert für die Rückführtemperatur geregelt wird, wobei zur Aufheizung des Reingasteilstroms in der Rückführleitung (18) eine Aufheizvorrichtung (19) vorgesehen ist, deren Leistung bei einem eingestellten konstanten Reingasteilstrom so geregelt wird, dass die Rückführtemperatur der Sollwerttemperatur entspricht.

2. Verfahren nach Anspruch 1, **dadurch gekennzeichnet, dass** die in die Rückführleitung (18, 22) abgezweigte Reingasteilmenge erhöht wird, wenn die Rückführtemperatur unter 150 °C fällt.

3. Verfahren nach einem der vorhergehenden Ansprüche, **dadurch gekennzeichnet, dass** die Reaktionsstrecke (12) als vertikaler Kanal mit einer Umlenkung um mindestens 90° ausgebildet ist, der so dimensioniert ist, dass er mit einer Geschwindigkeit von 8-16 m/s, bevorzugt aber von 8-10 m/s durchströmt wird.

4. Verfahren nach einem der vorhergehenden Ansprüche, **dadurch gekennzeichnet, dass** am Filter (13) abgeschiedene Feststoffe partiell und ohne weitere Aktivierung auf unverändertem Temperaturniveau in die Reaktionstrecke (12) und/oder den Abgaskanal (11) zurückgeführt werden mit einer Beladung < 80 g/m³ Abgas, maximal aber 100 g/m³ Abgas.

5. Verfahren nach einem der vorhergehenden Ansprüche, **dadurch gekennzeichnet, dass** die Rückführleitung (22) stromabwärts der Dosierstelle (25) als vorzugsweise vertikaler Wirbelstromreaktor ausgebildet ist, der so dimensioniert ist, dass er mit einer Geschwindigkeit von 8-16 m/s, bevorzugt aber 10-12 m/s durchströmt wird.

## Claims

1. A method for removing acidic noxious gases from an exhaust gas having a low exhaust-gas temperature, in which the exhaust gas is conducted via an exhaust-gas channel (11) into a reaction section (12) and sodium carbonate, which has been produced beforehand by means of the activation and splitting of a precursor product of sodium carbonate, is supplied to the exhaust gas in the exhaust-gas channel (11) or in the reaction section (12) and the sodium carbonate reacts as a sorbent with the noxious gases in the reaction section (12) so that the exhaust gas, after it has passed a filter (13) following the reaction section (12), is present as clean gas, a portion of the clean gas being branched off as partial clean gas flow into a return line (18, 22) which leads back into the exhaust-gas channel (11) and/or into the reaction section (12), the precursor product of sodium carbonate being dosed into the partial clean gas flow at a dosing point (25) in the return line (18, 22) and split there, the partial clean gas flow being heated to an activation temperature upstream of the dosing point (25), so that the precursor product of sodium carbonate is dosed into a heated partial clean gas flow at the dosing point (25), and at least 85% of the precursor product having been split in the return line before it is returned with the partial clean gas flow into the reaction section (12), **characterized**
**in that** the method is applied at an exhaust-gas temperature of less than 150°C,
**in that** the residence time of the sorbent in the reaction section is chosen such that it is converted at least to 85% to reaction product on leaving the reaction section and is no longer present as hydrogen carbonate,
**in that** the portion of the clean gas, which is branched off as partial clean gas flow into the return line (18, 22), is less than 8% of the clean gas flow,
**in that** the partial clean gas flow in the return line is heated such that the return temperature thereof, that is the temperature which is present before return into the reaction section (12), is 150-180°C, in that the activation temperature is 180-300°C, preferably 180-260°C, and
**in that** the activation temperature is regulated by means of a predetermined set-point value for the return temperature, wherein a heating device (19) is provided for heating the partial clean gas flow in the return line (18), the output of which is regulated in the case of a set constant partial clean gas flow in such a manner that the return temperature corresponds to the set-point temperature.

2. The method according to Claim 1, **characterized in that** the partial clean gas quantity branched off into the return line (18, 22) is increased if the return temperature falls below 150°C.

3. The method according to one of the preceding claims, **characterized in that** the reaction section (12) is constructed as a vertical channel with a deflection of at least 90°, the channel being dimensioned such that it is flowed through at a speed of 8-16 m/s, preferably however of 8-10 m/s.

4. The method according to one of the preceding claims, **characterized in that** solids deposited at the filter (13) are returned into the reaction section (12) and/or the exhaust-gas channel (11) partially and without further activation at an unchanged temperature level with a loading of < 80 g/m³ exhaust gas, at most however of 100 g/m³ exhaust gas.

5. The method according to one of the preceding claims, **characterized in that** the return line (22) is constructed downstream of the dosing point (25) as a preferably vertical eddy current reactor, which is dimensioned in such a manner that it is flowed through at a speed of 8-16 m/s, preferably however of 10-12 m/s.

## Revendications

1. Procédé de séparation de gaz nocifs acides de fumées de combustion présentant une faible température des fumées de combustion , pour lequel les fumées de combustion sont dirigées par un conduit de fumées de combustion (11) dans une trajectoire réactionnelle (12) et du carbonate de sodium, qui a été produit préalablement par l'activation et la scission d'un produit précurseur du carbonate de sodium, est amené aux fumées de combustion dans le conduit de fumées de combustion (11) et dans la trajectoire réactionnelle (12) et qui réagit en tant que sorbant avec les gaz nocifs dans la trajectoire réactionnelle (12) de telle manière que les fumées de combustion après qu'ils aient passé un filtre (13) suivant la trajectoire réactionnelle (12), sont présentes en tant que gaz purifiés, sachant qu'une partie des gaz purifiés est dérivée en tant que courant partiel de gaz purifiés dans une conduite de retour (18, 22), qui mène en retour dans le conduit de fumées de combustion (11) et/ou dans la trajectoire réactionnelle (12), sachant que le produit précurseur de carbonate de sodium dans le courant partiel de gaz purifiés est dosé à un point de dosage (25) dans la conduite de retour (18, 22) et y est dissocié, sachant que le courant partiel de gaz purifiés est réchauffé en amont du point de dosage (25) à une température d'activation de telle manière que le produit précurseur de carbonate de sodium est dosé au point de dosage (25) dans un courant partiel de gaz purifiés et sachant que le produit précurseur a été dissocié au moins à 85 % dans la conduite de retour, avant qu'il soit renvoyé avec le courant partiel de gaz purifiés dans la trajectoire réactionnelle (12), **caractérisé en ce que**
le procédé est employé à une température de fumées de combustion inférieure à 150° C,
**en ce que** la durée de séjour du sorbant dans la trajectoire réactionnelle est choisie de telle sorte qu'il est converti au moins à 85 % en produit de réaction en quittant la trajectoire réactionnelle et n'est plus présent en tant que carbonate d'hydrogène,
**en ce que** la partie de fumées de combustion , qui est dérivée en temps que courant partiel de gaz purifiés dans la conduite de retour (18, 22), est inférieure à 8 % du courant de gaz purifiés,
**en ce que** le courant partiel de gaz purifiés est réchauffé dans la conduite de retour de telle manière que sa température de retour, c'est-à-dire la température qui existe avant le retour dans la trajectoire réactionnelle (12), est de 150-180° C, **en ce que** la température d'activation est de 180-300° C, de préférence de 180-260° C, et
**en ce que** la température d'activation est réglée par le biais d'une valeur théorique prédéfinie pour la température de retour, sachant que pour réchauffer le courant partiel de gaz purifiés dans la conduite de retour (18), un dispositif de chauffage (19) est prévu dont la puissance pour un courant partiel de gaz purifiés constant établi est réglé de telle sorte que la température de retour correspond à la température de valeur théorique.

2. Procédé selon la revendication 1, **caractérisé en ce que** la quantité partielle de gaz pur dérivée dans la conduite de retour (18, 22) est augmentée, lorsque la température de retour tombe en dessous de 150°C.

3. Procédé selon l'une quelconque des revendications précédentes, **caractérisé en ce que** la distance de réaction (12) est constituée comme un conduit vertical avec une dérivation d'au moins 90°, qui est dimensionnée de telle manière qu'elle est traversée à une vitesse de 8-16 m/s, de préférence toutefois de 8-10 m/s.

4. Procédé selon l'une quelconque des revendications précédentes, **caractérisé en ce que** sur le filtre (13) des matières solides séparées sont renvoyées partiellement et sans autre activation à un niveau de température inchangé dans la trajectoire de réaction (12) et/ou le conduit de fumées de combustion (11) avec une charge < 80 g/m³ de fumées de combustion, au maximum toutefois de 100 g/m³ de fumées de combustion.

5. Procédé selon l'une quelconque des revendications précédentes, **caractérisé en ce que** la conduite de renvoi (22) en aval du point de dosage (25) est constituée comme réacteur à courant tourbillonnaire de préférence vertical, qui est dimensionné de telle manière qu'il est traversé à une vitesse de 8-16 m/s, de préférence toutefois de 10-12 m/s.
